# EUROPÄISCHE PATENTANMELDUNG

(11) **EP 4 209 801 A1**
(43) Veröffentlichungstag der Anmeldung: **12.07.2023**
(21) Anmeldenummer: 22213938.8
(22) Anmeldetag: 15.12.2022
(51) Int. Cl.: G01S 7/40, G01S 7/497, G01S 13/42, G01S 13/89, G01S 13/91, G01S 17/42, G01S 17/89

(54) **VERFAHREN ZUR ÜBERPRÜFUNG EINER IN EINEM VERKEHRSRAUM INSTALLIERTEN STATISCHEN ÜBERWACHUNGSANLAGE UND ÜBERWACHUNGSANLAGE**

(30) Priorität: 05.01.2022 DE 102022200073
(71) Anmelder: Continental Automotive Technologies GmbH, 30165 Hannover (DE)
(72) Erfinder: Goldhammer, Michael, 60488 Frankfurt am Main (DE); Quittenbaum, Peter, 60488 Frankfurt am Main (DE); Sauermann, Alexander, 60488 Frankfurt am Main (DE)
(74) Vertreter: Continental Corporation

(57) **Zusammenfassung**

Die Erfindung betrifft ein Verfahren zur Überprüfung einer in eine Verkehrsraum (12) installierten statischen Überwachungsanlage (10) mit einem Signalsender (14) zum Aussenden eines Signals (18) und einem Signalempfänger (16), der das von einem Objekt (20, 30) reflektierte Signal (18) des Signalsenders (14) empfangen kann, und mit Auswerteschaltung (24), die aus dem empfangenen Signal (18) ein Bild (26) der Umgebung erstellen kann, mit folgenden Schritten:
- Erstellen eines Referenzbildes (26) aus den Reflexionen (28) statischer Objekte (20) im von der Überwachungsanlage (10) zu überwachenden Raum (12);
- Ermitteln und Speichern zumindest eines Referenzwertes aus den Reflexionen (28) des Referenzbild des (26), anschließend
- Erstellen eines Vergleichsbildes aus den Reflexionen (28) statischer Objekte (20) im von der Überwachungsanlage (10) zu überwachenden Raum (12), wobei das Vergleichsbild zeitlich versetzt nach dem Referenzbild (26) aufgenommen wird,
- Ermitteln zumindest eines Vergleichswertes aus den Reflexionen (28) des Vergleichsbildes,
- Vergleichen des Vergleichswertes mit dem Referenzwert und Ausgabe eines Fehlersignal, wenn eine Abweichung des Vergleichswertes und des Referenzwertes zumindest einen Schwellwert überschreitet.

Die Erfindung betrifft des Weiteren eine statische Überwachungsanlage, die mit einem solchen Verfahren überprüft werden kann.

## Beschreibung

Die Erfindung betrifft ein Verfahren zur Überprüfung einer in einem Verkehrsraum installierten statischen Überwachungsanlage mit einem Signalsender zum Aussenden eines Signals und einem Signalempfänger, der das von einem Gegenstand reflektierte Signal des Signalsenders empfangen kann, und mit Auswerteschaltung, die aus dem empfangenen Signal ein Bild der Umgebung erstellen kann.

Statische Überwachungsanlagen werden verwendet, um Verkehrsbereiche bzw. den Verkehr auf den Verkehrsbereichen zu überwachen. Die Ergebnisse der Überwachung können beispielsweise zur Steuerung der Verkehrsströme oder einzelner Fahrzeuge verwendet werden.

Zur Überwachung werden beispielsweise Systeme bestehend aus einem Signalsender und einem Signalempfänger verwendet. Das von dem Signalsender ausgesendete Signal wird von Objekten reflektiert und kann vom Signalempfänger empfangen werden. Aus der Art und der Richtung der Reflektion und der Signalstärke des reflektierten Signals kann die Position von Objekten bestimmt uns somit ein Bild der Umgebung erstellt werden.

Die Erkennung beweglicher Objekte erfolgt beispielsweise, indem Veränderungen in den aus den reflektierten Signalen erstellten Bildern der Umgebung oder Änderungen des Signals (Laufzeit, Frequenz etc.) detektiert werden.

Nach der Montage der Überwachungsanlage kann es zu Verschiebungen bzw. Verdrehungen der Überwachungsanlage oder des Sensors kommen, die die Messergebnisse des Systems verfälschen können.

Aufgabe der Erfindung ist es, ein Verfahren zur Überprüfung einer statischen Überwachungsanlage bereitzustellen, dass eine Erkennung von Verschwenkungen des Sensors oder der Überwachungsanlage ermöglicht.

Zu Lösung der Aufgabe ist ein Verfahren zur Überprüfung einer in einem Verkehrsraum installierten statischen Überwachungsanlage vorgesehen, wobei die Überwachungsanlage einen Signalsender zum Aussenden eines Signals und einem Signalempfänger, der das von einem Gegenstand reflektierte Signal des Signalsenders empfangen kann, und eine Auswerteschaltung, die aus dem empfangenen Signal ein Bild der Umgebung erstellen kann, aufweist. Das Verfahren weist die folgenden Schritte auf:
- Erstellen eines Referenzbildes aus den Reflexionen statischer Objekte im von der Überwachungsanlage zu überwachenden Raum;
- Ermitteln und Speichern zumindest eines Referenzwertes aus den Reflexionen des Referenzbild des, anschließend
- Erstellen eines Vergleichsbildes aus den Reflexionen statischer Objekte im von der Überwachungsanlage zu überwachenden Raum, wobei das Vergleichsbild zeitlich versetzt nach dem Referenzbild aufgenommen wird,
- Ermitteln zumindest eines Vergleichswertes aus den Reflexionen des Vergleichsbildes,
- Vergleichen des Vergleichswertes mit dem Referenzwert und Ausgabe eines Fehlersignal, wenn eine Abweichung des Vergleichswertes und des Referenzwertes zumindest einen Schwellwert überschreitet.

Im Referenzbild werden Referenzpunkte oder Referenzmuster aus mehreren Referenzpunkten identifiziert, die feststehende Objekte darstellen. Aus den Daten diese Referenzpunkte oder Referenzmuster, beispielsweise der Position oder der Signalstärke wird zumindest ein Referenzwert ermittelt und in der Auswerteschaltung gespeichert.

Im laufenden Betrieb der Überwachungsanlage werden konstant Vergleichsbilder aufgenommen, die das aktuelle Verkehrsgeschehen abbilden. In diesen Vergleichsbildern werden zu den Referenzpunkte bzw. den Referenzmustern korrespondierende Vergleichspunkte oder Vergleichsmuster identifiziert. Aus diesen Vergleichspunkten oder Vergleichsmustern wird zumindest ein Vergleichswert ermittelt, wobei dieser Vergleichswert auf die gleiche Weise bzw. mit den gleichen Verfahren ermittelt wird, wie der Referenzwert.

Haben sich die Position bzw. die Ausrichtung der Überwachungsanlage sowie die Position der statischen Objekte im Überwachungsbereich der Überwachungsanlage nicht geändert, entspricht der Vergleichswert dem Referenzwert oder weicht nur geringfügig von diesem ab. Geringe oder kurzzeitige Abweichungen sind möglich, wenn einzelne statische Objekte bzw. einzelne Referenzpunkte kurzzeitig durch bewegliche Objekte abgedeckt sind. Eine dauerhafte Abweichung zwischen dem Vergleichswert und dem Referenzwert deutet darauf hin, dass sich die Ausrichtung der Überwachungsanlage verändert hat.

Um Schwankungen bei der Erfassung und der Ermittlung des Vergleichswertes, beispielsweise durch eine zeitweise Abdeckung von statischen Objekten, zu vermeiden, wird ein Schwellwert definiert, um den der Vergleichswert vom Referenzwert abweichen kann.

Wird dieser Schwellwert überschritten, wird ein Fehlersignal ausgegeben. Beispielsweise wird das Fehlersignal an eine übergeordnete Steuerung ausgegeben, die eine ausführliche Diagnose der Überwachungsanlage durchführen kann oder einen Wartungsdienst informieren kann.

Die Zusammenfassung der Referenzpunkte bzw. Referenzmuster zu einem Referenzwert der Vergleich dieses Referenzwertes mit einem Vergleichswert bietet den Vorteil, dass nur der zumindest eine Referenzwert und der zumindest eine Vergleichswert verglichen werden müssen. Ein Vergleich einzelner Punkte oder Muster, der mit einem größeren Rechenaufwand verbunden wäre, ist somit nicht erforderlich.

Vorzugsweise werden des Referenzbild und das Vergleichsbild in einem Polarkoordinatensystem-Raster erfasst und/oder gespeichert, wobei jeweils ein Winkel, eine Distanz sowie eine Intensität jedes Rasterfeldes des Polarkoordinaten-Rasters erfasst und/oder gespeichert werden, wobei die Intensität des Rasterfeldes aus der Anzahl und der Intensität der Reflexionen des jeweiligen Rasterfeldes ermittelt wird. Verschwenkungen um eine horizontale Achse und wirken sich bei einer Erfassung des Vergleichsmusters mittels Polarkoordinaten anders auf die Ermittlung des Vergleichswertes aus als Verschwenkungen um eine vertikale Achse. Somit kann bei einer Erfassung des Referenzmusters in einem Polarkoordinatensystem und der folgenden Ermittlung des Vergleichswertes die Richtung, in der die Überwachungsanlage verschwenkt wurde, detektiert werden.

Ein erster Referenzwert und ein erster Vergleichswert, der mit dem ersten Referenzwert verglichen wird, werden beispielsweise aus den Distanzen und den Intensitäten der Rasterfelder des Polarkoordinaten-Rasters gebildet, wobei insbesondere aus den Distanzen und den Intensitäten der Rasterfelder des Polarkoordinaten-Rasters jeweils ein Quotient gebildet wird.

Das Ermitteln des ersten Referenzwertes und des ersten Vergleichswertes kann beispielsweise jeweils ein Aufsummieren der Distanzen und der Intensitäten der Rasterfelder des Polarkoordinaten-Rasters umfassen.

Ein zweiter Referenzwert und ein zweiter Vergleichswert, der mit dem zweiten Referenzwert verglichen wird, kann aus den Distanzen und den Intensitäten der Rasterfelder des Polarkoordinaten-Rasters gebildet wird, wobei insbesondere aus den Winkeln und den Intensitäten der Rasterfelder des Polarkoordinaten-Rasters jeweils ein Quotient gebildet wird.

Ein Verschwenken um eine horizontale Achse, beispielsweise ein Abkippen, wie es beispielsweise bei einer unzureichenden oder fehlerhaften Montage vorkommen kann, führt dazu, dass der Abtastbereich der Überwachungsanlage sich in vertikaler Richtung, also nach oben oder nach unten, verschiebt. Da der Abtastbereich in vertikaler Richtung begrenzt ist, führt dies dazu, dass einzelne Referenzpunkte und/oder Referenzmuster aus dem Abtastbereich der Überwachungsanlage herausfallen, also nicht mehr von dieser erfasst werden. Des Weiteren können neue Referenzpunkte und/oder Referenzpunkte, die sich im neu hinzugekommenen Abtastbereich befinden, hinzukommen. Referenzpunkte und/oder Referenzmuster, die weiterhin im Abtastbereich liegen, werden in vertikaler Richtung verschoben, sodass sich deren Position im Polarkoordinatensystem verschiebt.

Das Ermitteln des zweiten Referenzwertes und des zweiten Vergleichswertes kann jeweils ein Aufsummieren der Winkel und der Intensitäten der Rasterfelder des Polarkoordinaten-Rasters umfassen.

Für den zumindest einen Schwellwert kann ein definierter Anfangswert vorgegeben sein. Der Schwellwert ist hierbei so definiert, dass eine geringe Abweichung des Vergleichswertes vom Referenzwert möglich ist. Eine solche geringe Abweichung kann beispielsweise dadurch entstehen, wenn durch sich bewegende Objekte zusätzliche Reflexionen entstehen oder statische Objekte verdeckt sind, sodass von diesen keine Reflexionen empfangen werden können. Der Schwellwert ist so definiert, dass bei einer solchen Abweichung kein Fehlersignal ausgegeben wird.

Der zumindest eine Schwellwert kann auch während des Betriebes der Überwachungsanlage angepasst werden, insbesondere in Abhängigkeit von der ermittelten Abweichung des Vergleichswertes und des Referenzwertes. Beispielsweise kann eine Standardabweichung des Vergleichswertes vom Referenzwert ermittelt werden. Eine solche Standardabweichung kann übliche Schwankungen bei den Reflexionen, die durch eine zeitweise Abdeckung einzelne statische Objekte durch sich bewegende Objekte verursacht werden können, berücksichtigen. Die Standardabweichung kann beispielsweise im laufenden Betrieb ermittelt werden. Bei einer geringen Standardabweichung kann der Schwellwert entsprechend reduziert werden.

Beispielsweise wird der Schwellwert in Abhängigkeit von der Standardabweichung berechnet, beispielsweise als Vielfaches der Standardabweichung oder eines aus der Standardabweichung berechneten Wertes.

Das Referenzbild kann beispielsweise vorab aufgenommen werden, beispielsweise bei der Installation der Überwachungsanlage.

Das Referenzbild kann aber auch angepasst werden, insbesondere in Abhängigkeit von den erfassten Vergleichsbildern.

Beispielsweise können Reflexionen von statischen Objekten, die wiederholt bzw. bei jeder Aufnahme eines Vergleichsbildes auftreten, mit einem Lernfaktor gewichtet werden, der mit der Reflexion bzw. dem Referenzmuster, das die Reflexionen beinhaltet, gespeichert wird. Bei wiederholt nicht auftretenden Reflexionen kann zudem ein Verlernfaktor subtrahiert werden, sodass die Reflexionen, wenn diese kurzzeitig nicht auftreten, dennoch berücksichtigt aber nach einer definierten Zeit nicht mehr berücksichtigt werden.

Dadurch ist eine dynamische Anpassung des Referenzbildes, beispielsweise an bauliche Maßnahmen oder sich veränderte Vegetation, möglich.

Die Erfindung betrifft des Weiteren eine statische Überwachungsanlage, die eine Auswerteschaltung aufweist, die die Überwachungsanlage mit einem der vorstehend beschriebenen Verfahren überprüfen kann.

Weitere Vorteile und Merkmale ergeben sich aus der nachfolgenden Beschreibung in Verbindung mit den beigefügten Zeichnungen. In diesen zeigen:
- Figur 1: eine schematische Darstellung einer Überwachungsanlage;
- Figur 2: eine schematische Darstellung eines Referenzbildes der Überwachungsanlage aus Figur 1 ;
- Figur 3: das Referenzbild aus Figur 2 mit einem Polarkoordinaten-Raster;
- Figur 4: eine Darstellung der Reflektionen des Referenzbild es aus Figur 2 im Polarkoordinatenrasters;
- Figur 5: eine schematische Darstellung eines Vergleichsbildes mit einer Verschränkung in horizontaler Richtung; und
- Figur 6: eine schematische Darstellung eines Vergleichsbildes mit einer Verschränkung in vertikaler Richtung.

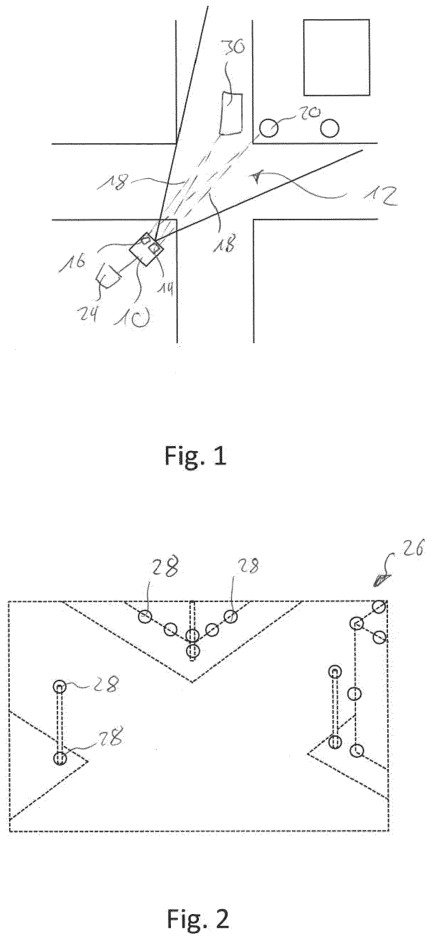

In Figur 1 ist eine statische Überwachungsanlage 10 für einen Verkehrsraum 12, in diesem Beispiel eine Kreuzung, gezeigt.

In Figur 1 ist lediglich eine Überwachungsanlage 10 gezeigt. Der Verkehrsraum 12 kann aber auch mehrere Überwachungsanlagen 10 aufweisen, beispielswiese, um den Verkehrsraum 12 aus verschiedenen Richtungen und/oder Perspektiven überwachen zu können. Die Überwachungsanlagen 10 können miteinander verbunden sein oder an eine gemeinsame Steuerung angeschlossen sein, um beispielsweise die Daten der Überwachungsanlagen 10 abzugleichen und/oder ein dreidimensionales Bild des Verkehrsraums 12 zu erstellen.

Die Überwachungsanlage weist einen Signalsender 14 und einen Signalempfänger 16 auf. Der Signalsender 14 sendet ein Signal 18 aus, das von einem Objekt 20 reflektiert wird. Das Signal 18 ist beispielsweise ein optisches, akustisches oder elektromagnetisches Signal. Beispielsweise ist das Signal ein RADAR (radio detection and ranging) - oder LIDAR (light detection and ranging)-Signal.

Trifft das Signal 18 auf ein Objekt 20, wird das Signal 18 reflektiert. Das reflektierte Signal 18 wird von dem Signalempfänger 16 erfasst. Aus der Laufzeit des Signals 18vom Signalsender 14 bis zum Signalempfänger 16 kann die Entfernung des Objekts 20 bestimmt werden. Aus der Richtung, in der das Signal 18 ausgesendet wird und der Richtung, aus der das Signal 18 vom Signalempfänger 16 empfangen wird, kann zudem die Richtung des Objekts 20 bestimmt werden.

Aus den empfangenen Signalen 22 bzw. der Richtung sowie der Entfernung der Objekte 20 kann in einer Auswerteschaltung 24 ein Bild 26 des Verkehrsraums 12 erstellt werden. Jede Reflexion kann hierbei in diesem Bild 26 vereinfacht durch einen Punkt 28 dargestellt werden (siehe Figur 2).

Das Bild 26 wird ständig aktualisiert, um Veränderungen im Verkehrsraum 12, beispielsweise sich bewegende Objekte 30 wie Fahrzeuge, zu erkennen. Beispielsweise wird der Signalsender 14 so verschwenkt bzw. bewegt, dass dieser den gesamten zu überwachenden Bereich regelmäßig bzw. mit einer vorgegebenen Frequenz erfasst.

Befindet sich ein sich bewegendes Objekt 30 im Verkehrsraum 12, kann dieses dadurch erkannt werden, dass sich die Reflexionen, also die Punkte 28 dieses Objekts im Bild 26 verändern, beispielsweise ihre Position ändern oder die Laufzeit und/oder die Frequenz des Signals 22 zu- oder abnimmt.

Statische Objekte, beispielsweise Häuser oder Verkehrszeichen stellen dagegen eine stets gleiche Reflexion des Signals 22 bereit, sodass die Punkte 28, die diese statischen Objekte im Bild 26 darstellen, stets unverändert bleiben.

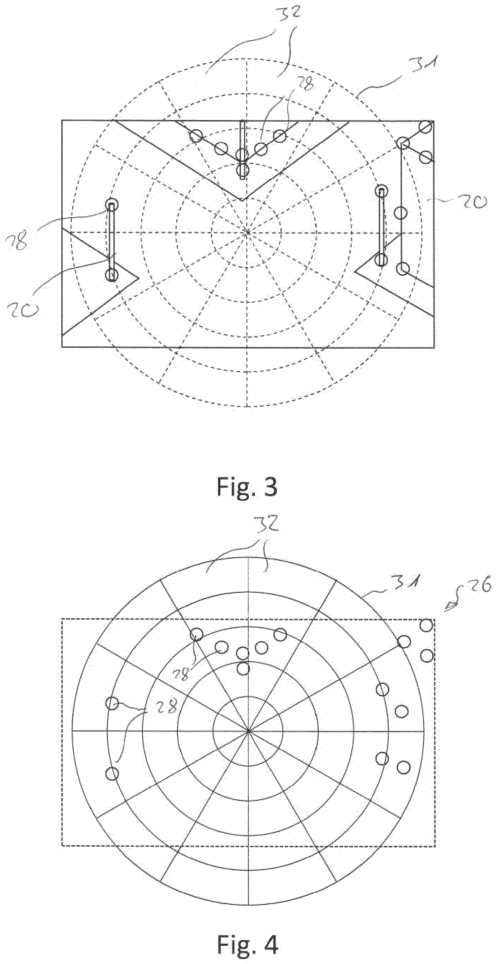

Wie in den Figuren 3 und 4 zu sehen ist, ist der Überwachungsbereich in ein Polarkoordinaten-Raster unterteilt. Das heißt, ausgehend von einem Mittelpunkt ist der Überwachungsbereich 31 in konzentrische Ringe unterteilt, die in Kreisrichtung gleichmäßig in Rasterfelder 32 aufgeteilt sind.

Diese Rasterfelder 32 können jeweils durch die Distanz vom Mittelpunkt sowie den Winkel zur eine Referenzebene eindeutig identifiziert werden. Zusätzlich wird für jedes dieser Rasterfelder 32 eine Intensität angegeben werden, die von der Anzahl der Reflexionen innerhalb dieses Rasterfeldes 32 sowie der Stärke dieser Reflexionen abhängig ist. Aus den Daten der einzelnen Rasterfelder 32 wird zumindest ein Referenzwert ermittelt.

Beispielsweise kann ein erster Referenzwert ein Graph bzw. ein Quotient sein, der aus den aufsummierten Distanzen und den aufsummierten Intensitäten der einzelnen Rasterfelder 32 gebildet wird.

Ein zweiter Referenzwert kann beispielsweise ein Graph bzw. ein Quotient sein, der aus den aufsummierten Winkeln und den auf summierten Intensitäten der einzelnen Rasterfelder 32 gebildet wird.

Diese Referenzwert werden in der Auswerteschaltung abgespeichert.

Im laufenden Betrieb der Überwachungsanlage wird aus den aktuellen Reflexionen ein Vergleichsbild des aktuellen Zustandes des Überwachungsbereichs erstellt, das ständig aktualisiert wird.

Aus den Vergleichsbildern bzw. den Reflexionen der Vergleichsbilder werden analog zum ersten Referenzwert bzw. zum zweiten Referenzwert ein erster Vergleichswert bzw. ein zweiter Vergleichswert ermittelt.

Diese Vergleichswerte werden jeweils mit dem korrespondierenden Referenzwert verglichen, um ein Verschwenken des Überwachungsbereichs um eine vertikale Achse (Verschiebung um den Azimutwinkel) und/oder um eine horizontale Achse (Höhenwinkel) zu erkennen.

Beispielsweise kann es durch äußere Einflüsse zu einer Verschwenkung oder einer Verdrehung der Überwachungsanlage um eine vertikale Achse kommen. Eine fehlerhafte oder defekte Befestigung der Überwachungsanlage kann beispielsweise zu einem Abkippen der Überwachungsanlage und somit einer Verschwenkung um eine horizontale Achse führen.

Um eine Verschwenkung um eine vertikale Achse zu detektieren, wird der erste Vergleichswert mit dem ersten Referenzwert verglichen.

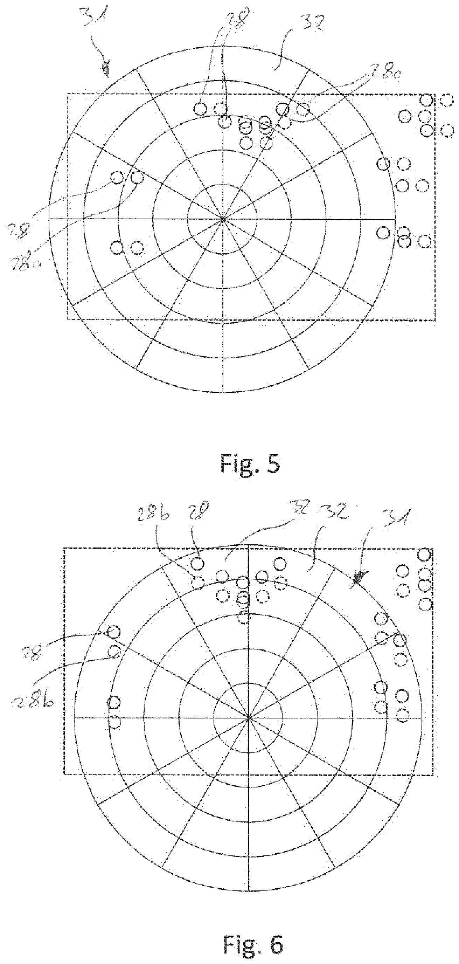

Ein Verschenken der Überwachungsanlage um die vertikale Achse hat eine Verschiebung des Musters, aus dem die erste Vergleichswert bzw. erster Referenzwert ermittelt werden, zur Folge (Figur 5). Zur Veranschaulichung sind die ursprünglichen Positionen der Reflexionen 28b im Polarkoordinaten-Raster 32 gestrichelt dargestellt. Somit ändern sich im Polarkoordinatensystem auch die Distanzen zu den einzelnen Referenzpunkten bzw. Referenzmustern. Dadurch werden auch die Intensitäten in den einzelnen Rasterfeldern des Polarkoordinaten-Rasters verschoben. Dies führt dazu, dass der erste Vergleichswert so verändert wird, dass eine starke Abweichung vom ersten Referenzwert erfolgt.

Überschreitet die Abweichung des ersten Vergleichswerts um ersten Referenzwert einen ersten Schwellwert für den ersten Referenzwert, erfolgt eine Ausgabe eines Fehlersignals, das insbesondere eine Information darüber enthält, dass der erste Schwellwert überschritten ist bzw. dass eine Verschwenkung eine vertikale Achse erfolgt ist.

Durch geeignete Wahl des Ermittlungsverfahrens für den ersten Referenzwert bzw. den ersten Vergleichswert kann zudem eine Aussage über den Winkel der Verschwenkung getroffen werden.

Beispielsweise können die kumulierten Intensitäten des Referenzbildes und des Vergleichsbildes grafisch über dem Azimutwinkel aufgetragen werden. Die Summe der quadratischen Abweichungen beider Kurven (Residuenquadratsumme (SQR)) kann als Indikator für die Verschwenkung verwendet werden.

Um ein Verschwenken der Überwachungsanlage um eine horizontale Achse zu detektieren, wird der zweite Vergleichswert mit dem zweiten Referenzwert verglichen.

Bei einem Abkippen der Überwachungsanlage, also einem Verschwenken um eine horizontale Achse, wird nicht zu einer Verschiebung der statischen Reflexionen der statischen Objekte, da die Distanz und der Azimutwinkel der Überwachungsanlage relativ zu den statischen Objekten gleichbleibt. Durch das Abkippen verlassen aber einzelne statische Reflexionen in vertikale Richtung das Überwachungsfeld des Sensors verlassen bzw. neue Reflexionen kommen hinzu (Figur 6).

Dies kann durch den Vergleich des zweiten Vergleichswertes mit dem zweiten Referenzwert detektiert werden, da eine solche Verschiebung zu einer Veränderung der Position der Intensitäten im Polarkoordinatensystem führt.

Um den Winkel des Verschwenkung zu erfassen, kann ebenfalls die Summe der quadratischen Abweichungen beider Kurven (Residuenquadratsumme (SQR)) verwendet werden.

Das vorstehend beschriebene Verfahren bietet eine einfache und zuverlässige Methode, um Verschwenkungen der Überwachungsanlage 10 zu erkennen. Insbesondere kann durch die Aufteilung des Überwachungsbereichs in ein Polarkoordinaten-Raster die Datenmenge und somit der Rechenaufwand deutlich reduziert werden. Beispielsweise umfasst ein Polarkoordinaten-Raster 200 Azimut-Sektoren, 200 Distanzstufen, sowie 8 bit für die Intensitätsstufen. Dies entspricht insgesamt nur 40kB Speicher.

## Patentansprüche

1. Verfahren zur Überprüfung einer in eine Verkehrsraum (12) installierten statischen Überwachungsanlage (10) mit einem Signalsender (14) zum Aussenden eines Signals (18) und einem Signalempfänger (16), der das von einem Objekt (20, 30) reflektierte Signal (18) des Signalsenders (14) empfangen kann, und mit Auswerteschaltung (24), die aus dem empfangenen Signal (18) ein Bild (26) der Umgebung erstellen kann, mit folgenden Schritten:
- Erstellen eines Referenzbildes (26) aus den Reflexionen (28) statischer Objekte (20) im von der Überwachungsanlage (10) zu überwachenden Raum (12);
- Ermitteln und Speichern zumindest eines Referenzwertes aus den Reflexionen (28) des Referenzbild des (26), anschließend
- Erstellen eines Vergleichsbildes aus den Reflexionen (28) statischer Objekte (20) im von der Überwachungsanlage (10) zu überwachenden Raum (12), wobei das Vergleichsbild zeitlich versetzt nach dem Referenzbild (26) aufgenommen wird,
- Ermitteln zumindest eines Vergleichswertes aus den Reflexionen (28) des Vergleichsbildes,
- Vergleichen des Vergleichswertes mit dem Referenzwert und Ausgabe eines Fehlersignal, wenn eine Abweichung des Vergleichswertes und des Referenzwertes zumindest einen Schwellwert überschreitet.

2. Verfahren nach Anspruch 1, **dadurch gekennzeichnet, dass** des Referenzbild und das Vergleichsbild in einem Polarkoordinatensystem-Raster (32) erfasst und/oder gespeichert wird, wobei jeweils ein Winkel, eine Distanz sowie eine Intensität jedes Rasterfeldes des Polarkoordinaten-Rasters erfasst und/oder gespeichert werden, wobei die Intensität des Rasterfeldes aus der Anzahl und der Intensität der Reflexionen (28) des jeweiligen Rasterfeldes ermittelt wird.

3. Verfahren nach Anspruch 2, **dadurch gekennzeichnet, dass** ein erster Referenzwert und ein erster Vergleichswert aus den Distanzen und den Intensitäten der Rasterfelder des Polarkoordinaten-Rasters gebildet wird, wobei insbesondere aus den Distanzen und den Intensitäten der Rasterfelder des Polarkoordinaten-Rasters jeweils ein Quotient gebildet wird.

4. Verfahren nach Anspruch 3, **dadurch gekennzeichnet, dass** das Ermitteln des ersten Referenzwertes und des ersten Vergleichswertes jeweils ein Aufsummieren der Distanzen und der Intensitäten der Rasterfelder des Polarkoordinaten-Rasters umfasst.

5. Verfahren nach Anspruch 2, **dadurch gekennzeichnet, dass** ein zweiter Referenzwert und ein zweiter Vergleichswert aus den Distanzen und den Intensitäten der Rasterfelder des Polarkoordinaten-Rasters gebildet wird, wobei insbesondere aus den Winkeln und den Intensitäten der Rasterfelder des Polarkoordinaten-Rasters jeweils ein Quotient gebildet wird.

6. Verfahren nach Anspruch 3, **dadurch gekennzeichnet, dass** das Ermitteln des zweiten Referenzwertes und des zweiten Vergleichswertes jeweils ein Aufsummieren der Winkel und der Intensitäten der Rasterfelder des Polarkoordinaten-Rasters umfasst.

7. Verfahren nach einem der vorhergehenden Ansprüche, **dadurch gekennzeichnet, dass** für den zumindest einen Schwellwert ein definierter Anfangswert vorliegt.

8. Verfahren nach einem der vorhergehenden Ansprüche, **dadurch gekennzeichnet, dass** der zumindest eine Schwellwert angepasst wird, insbesondere in Abhängigkeit von der ermittelten Abweichung des Vergleichswertes und des Referenzwertes.

9. Verfahren nach einem der vorhergehenden Ansprüche, **dadurch gekennzeichnet, dass** das Referenzbild vorab aufgenommen wird.

10. Verfahren nach einem der vorhergehenden Ansprüche, **dadurch gekennzeichnet, dass** das Referenzbild angepasst wird, insbesondere in Abhängigkeit von den erfassten Vergleichsbildern.

11. Statische Überwachungsanlage (10) für einen Verkehrsraum (12), mit einem Signalsender (14) zum Aussenden eines Signals (18) und einem Signalempfänger (16), der das von einem Objekt (20, 30) reflektierte Signal (18) des Signalsenders (14) empfangen kann, und mit Auswerteschaltung (24), die aus dem empfangenen Signal (18) ein Bild (26) der Umgebung erstellen kann, wobei die Auswerteschaltung zur Überprüfung der statischen Überwachungsanlage nach einem Verfahren der vorhergehenden Ansprüche ausgebildet ist.
